# EUROPEAN PATENT APPLICATION

(11) **EP 4 684 961 A1**
(43) Date of publication of application: **28.01.2026**
(21) Application number: 24190147.9
(22) Date of filing: 22.07.2024
(51) Int. Cl.: B32B 27/20, B32B 27/36

(54) **SUSTAINABLE AND VERSATILE LAYER FOR AN AUTOMOTIVE PART**

(71) Applicant: Autoneum Management AG, 8406 Winterthur (CH)
(72) Inventor: Berger, Yann, 5355 Aadorf (CH)

(57) **Abstract**

Versatile layer for an automotive part comprising a matrix and a filler characterized in that the filler is a thermoplastic filler consisting of a thermoplastic polymer-based powder with a melting temperature at least 20°C above the melting temperature of the matrix.

## Description

### Technical Field

Sustainable and versatile layer for an automotive part, in particular as a surface layer, an automotive part with a versatile layer and a method of producing such a layer.

### Background

Automotive parts, in particularly automotive soft trim part and cladding for interior spaces of a car or truck are made as multilayer products. Depending on the function of the part or cladding, one or more layers may be used that are viscoelastic layers. The viscoelastic layer needs to be malleable during the production process of the automotive part, as this involves a certain degree of shaping in a 3-dimensional structure in normally a thermal moulding or forming process. State of the art viscoelastic layers are predominantly based on polyolefins or Polyvinyl Chloride (PVC or Vinyl).

Here today the trend is going to more sustainable products with material combinations that are more easily recyclable to same or higher-level products. As the thermoplastic elastomeric layers are combined with felt based materials, films, foils or foams it becomes a multilayer multi-material automotive part that is difficult to recycle or to take apart into the various materials used. Hence, they are difficult to upcycle in a high-quality product again, while recycling companies are not willing to take them back because of the mixed plastic nature.

An example of another area that is using thermoplastic elastomeric layer or combined layers is closed surface coverage for automotive parts, like a flooring surface, a trunk coverage or side panel surfaces. These layers may be cleaned or come in contact with liquids and should therefore be easy to dry. These surface materials may also be applied as a patch locally to enhance the performance for instance as an anti-skid patch on the flooring surface, in particularly at the driver's site of a vehicle, or in a storage space of a vehicle.

To reduce cost or increase the weight of the layer it is usually combined with inert fillers like calcium carbonate, these inert materials reduce the quality of the layers so much that it is rendered of no value for recycling streams, ending up in landfill. This is a big problem for any waste containing such materials or any products with such layers included.

One object of the invention is to provide an improved sustainable material useful for the manufacture of thermoplastic layers to use as a barrier layer in a multilayer system and/or an aesthetic surface layer.

### Summary

The object is achieved with versatile layer for an automotive part comprising a matrix and a filler according to main claim 1, an automotive part including a versatile layer according to the invention and a method of producing such a versatile layer.

In particularly, with a versatile layer having a filler comprising a thermoplastic polymer-based powder with a melting temperature at least 20°C above the melting temperature of the matrix, preferably at least 30°C above the melting temperature of the matrix, more preferably at least 40°C above the melting temperature of the matrix.

Preferably the softening point of the thermoplastic polymer-based powder is higher than the softening point of the matrix material.

Although a light softening and tackiness may occur with the polymer-based powder used as a filler and is even preferable to create a good bonding of the powder within the matrix, the powder should maintain its original character and not melt and mix with the matrix as a polymer. The powder should maintain substantially a discrete particles structure within the matrix.

Preferably the versatile layer may have a filler comprising a thermoplastic polymer-based powder with a melting temperature above the melting temperature of the matrix, preferably above 200°C, more preferably above 225°C.

As the polymer-based powder has a melting temperature above the melting temperature of the matrix the powder particles are not melting during the thermal compounding of the versatile layer, so they stay substantially intact.

Surprisingly, using a polymer-based powder in the matrix has also a positive impact on the processing of the material, for instance the material tends to stick less to the surfaces of the equipment like for instance the calander.

It is possible to produce a grain effect on the surface related to the polymer powder. Surprisingly it was found that by maintaining this grain effect at least partially on the surface, not only a more mat surface was achieved which reduces shine, also the scratch and abrasion resistance of the surface was further improved.

The positive effects of the polymer powder filler content may be achieved with a low content of polymer-powder filler of at least 15% by weight of the versatile layer, preferably a higher weight of at least 20% by weight of the versatile layer, preferably at least 40% by weight of the versatile layer further increases the effects observed without diminishing the overall performance of the layer.

In one embodiment of the versatile layer according to the invention may be used as a surface which is easily washable or cleanable and maintains a good appearance under abrasive conditions. The versatile layer according to the invention is not only scratch resistant, but in the unlikely case of scratches, they are less visible to the naked eye due to the matted finish of the material.

The versatile layer may be used on its own to directly cover a structural part like a load floor or a wall panel in a car or truck, or may be combined with additional layers, like a padding layer for instance a soft foam or felt layer, and/or a stiffening layer, like a compressed or needled felt layer. Although the versatile layer may be water and/ or airtight in the final product, it might be necessary to combine it with a thin foil layer laminated to the back surface of the versatile layer. This might be necessary for instance in case of applying other layers to the back, as some processes are generating large pressures for a short time which might make the layer temporarily open to air and or molten substances, causing leakage to the surface.

Preferably, the powder particles used may be obtained from waste of recycling processes, like recycled interior car parts or scrap waste containing a high content of fibrous material and intermediate layers. These type of recycling processes are trying to separate reusable material from those that are not easily used in the current recycling processes. One of these side products is polymer powder.

Preferably the material of the matrix and the polymer powder are all based on the same class of materials, for instance all polyolefin based, all polyamide based, all polyester based, or more preferably all terephthalate based.

By basing the matrix and polymer powder on the same material bases and combining this layer with other layers like felt or carpet layers that are also substantially based on the same class of materials, it is possible to create a mono-material part that may be recycled in one step without the need of separating layers. The negative effect of low-quality fillers reducing the overall quality is eliminated while maintaining the required features of the part produced.

The polymer powder filler is preferably obtained from waste material, either by reducing waste into powder or by using powder obtained as a site product of a recycling process or similar production process.

Preferably the end-of-life upcycling is considered when choosing the materials of the powder. Preferably the nature of the particles and the matrix are the same or similar, such that they may be re-spun into fibers in a later stage when the automotive part comprising the versatile layer is due for recycling.

Preferably the polymer powder is obtained from waste predominantly comprising terephthalate-based material, for instance comprising polyethylene terephthalate (PET) and or polybutylene terephthalate (PBT) and or Polytrimethylene terephthalate (PTT) and or Polycyclohexylenedimethylene terephthalate (PCT).

Thermoplastic powder waste comprising different terephthalate-based materials may be from mixed origin, as long as the melting temperature is according to the invention.

The thermoplastic powder filler may have a particle size that is compliant with the process of making the versatile layer, preferably the particles are not larger than 300 microns, preferably the main particle size is between 150 and 200 microns. With the particles size not larger 300micron is meant that all particles pass a sieve of 300 micron according to the ASTM test.

The main component of the thermoplastic powder filler should be in powder form, however small impurities of ultrashort fibres may be still available. Preferably ultrashort fibers should not exceed 5% of the weight of the filler.

Preferably, the powder filler may be coloured depending on the interior parts used for the recycling. It might be advantageous to use a coloured powder version in a black or other colour matrix to obtain a speckled effect of the versatile layer. Alternatively, both the powder filler and the matrix are colour matched to create a single colour layer.

The powder filler may come from other sources than car parts and may include pigments or dye based on the original product the recycled material was obtained from. Hence the powder filler may be coloured or even comprise multiple colours, enhancing the surface aesthetics both with differentiation in matrix colours as well as in filler colours.

Alternatively, the matrix may stay clear showing the layer underneath, creating a further dimension to the appearance of the surface layer.

The versatile layer according to the invention comprises a matrix and a filler. Preferably the matrix comprises at least a first copolymer of terephthalate-based material. A copolymer based on PET, PBT, PTT or PCT or combinations of these is preferred. The first copolymer is at least 40% by weight of the versatile layer, preferably at least 50% by weight of the versatile layer. Preferably the first copolymer has a melting temperature in the range of 140 to 160°C as measured with DSC.

Preferably the first copolymer has a Shore A hardness in the range of 80 to 84 as measured based on ASTM D-2240.

Preferably the first copolymer has a melt flow index (according to ISO 1133 measured at 190°C/21.2N) of between 5-15 gr/10 minutes.

The first copolymer may by a copolyester thermoplastic elastomers (TPEE) based on the materials as disclosed. A copolyester thermoplastic elastomer (TPEE) comprises hard segments comprising of crystalline polyesters, preferably poly (butylene terephthalate) (PBT) or poly (ethylene terephthalate) (PET), and soft segments comprising of amorphous polyethers such as poly (tetra methylene ether glycol terephthalate) or poly (alkylene glycol). Preferably a TPEE with the requirements of the first copolymer are chosen.

The matrix of the versatile layer according to the invention, may further comprise a second copolymer of terephthalate-based material.

The second copolymer may have a melting temperature slightly lower than the first copolymer preferably in the range of 130 to 155°C as measured with DSC. The second copolymer may be also terephthalate based, preferably based on PET, PBT, PTT or PCT or combinations of these. Preferably the first and second copolymer are based on the same or comparable materials.

Preferably the second copolymer used has a Shore A hardness in the range of 92 to 98 as measured based on ASTM D-2240.

The second copolymer aids to adjust some of the properties of the first copolymer to obtain an optimal behaviour of the matrix in the versatile layer. This might be either for optimisation or adaptation of process conditions and or of the mouldability of the final layer in the automotive part. Preferably the second copolymer is up to 20% by weight based on the versatile layer.

Optionally, any further copolymers based on same or similar terephthalate-based materials may be used to further enhance the required features of the versatile layer.

The versatile layer will be produced with a thermal mixing of the matrix material or materials, any optional additives and/or dyes and the thermoplastic filler powder, to obtain a layer whereby the filler powder particles are encapsulated within the matrix material.

Preferably the matrix, comprising the first, and optionally second or additional copolymers, is not more than 80% by weight of the full layer.

As preferably all materials used are terephthalate based, copolymers with a lower IV are paired with polymer powders having a higher IV, making it an ideal material to recycle in a fiber spinning process, whereby all materials - matrix and filler- are molten and compounded to form a new matrix material that may be mixed again with powder according to the invention. This is an advantage vs traditional mass layer material whereby the inert filler even paired with a thermoplastic matrix has both only lower quality material as matrix and an inert filler that is not compatible with most current recycling processes. This state-of-the-art material has a too low energy to be used for thermal recovery and can only be used for landfill.

The new material proposed is not only higher quality for recycling but can also be used as both a barrier layer for acoustic automotive parts as well as a surface layer with a high abrasion resistance.

The density of the layer may be between 1.2 and 1.4 kg/m³.

All material compositions are by weight based on the versatile layer being 100%. Slight variations may be adjusted by reducing the main first Copolymer and or the filler content to obtain the 100% necessary for the versatile layer.

Both the matrix copolymer or copolymers and the filler polymers are terephthalate-based materials, they may be polymers or copolymers of Aliphatic-aromatic polyesters, preferably polyethylene terephthalate (PET), polybutylene terephthalate (PBT), Polytrimethylene terephthalate (PTT), Polycyclohexylenedimethylene terephthalate (PCT), poly (hexamethylene terephthalate) (PHT) or combinations with such polymers.

The copolymers and polymers used may be based on bio resourced, reclaimed, or recycled materials, or may include such type of sourced materials.

An automotive part may comprise the versatile layer according to the invention, either as an outer surface layer or an intermediate layer.

The versatile layer is preferably airtight and/ or watertight and as such functions as a barrier layer, if paired with a soft foam or felt layer. As the layer is also aesthetic pleasing and abrasive resistant, it may function as a barrier layer and a surface layer within one part at the same time minimising the number of layers necessary in equivalent state of the art parts. This type of product may be used in the passenger compartment or in the front or rear packaging area of the vehicle.

With vehicle, passenger cars, trucks and tractors are meant. Whereby the thickness of the layer may vary for the same function between the vehicle types to adapt to the specific needs within that type of vehicle.

The versatile layer may provide in the automotive part an aesthetic surface layer, a local protective coverage of a surface layer area, like a heel pad, preferably a local patch surface welded to the underneath layer. It may also be used as a separate loose layer to put on top of a surface for instance in the boot of a vehicle, or as an inlay in a storage compartment.

An example may be a carpet surface - tufted or needle punched comprising a heel pad made with the versatile layer material according to the invention on the surface at the driver's site. Preferably, both the versatile layer material and at least the main components of the carpet are based on the same or similar material, preferably all are predominantly terephthalate based.

Automotive part with a versatile layer according to the invention, whereby the versatile layer forms a mass layer for an acoustic mass-spring system and whereby the density of the versatile layer is at least 1.2 kg/m³. Preferably the area weight is between 500 and 4000 g/m².

Automotive parts with a versatile layer according to the invention, may further comprise ad least one additional layer laminated to the versatile layer or an adjacent layer, preferably at least one of a fibrous layer, a foam layer, a film layer, an adhesive layer, composite layer, a carpet layer, surface layer, stiffening layer, like a honeycomb layer, carton layer, paper layer or wood layer.

Automotive part with a versatile layer according to the invention, wherein the area weight of said versatile layer is greater than 0.1kg/m², preferably between 0.1 and 8 kg/m².

The bending stiffness of said versatile layer in an automotive part may be adapted by increasing the filler content and or adapting the first and optional second or additional copolymers used in the matrix material to adapt to the requested requirements.

### Drawings

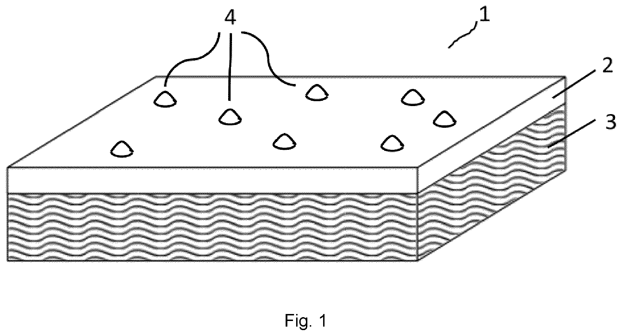

Figure 1 shows an example of an automotive part with a versatile layer according to the invention.

Figure 1 is showing schematically a first layout for an automotive part incorporating a versatile layer according to the invention. The part 1 comprises a versatile layer 2 according to the invention and an optional second layer 3 underneath. The second layer may be soft foam or felt layer to function as a padding layer. The versatile layer may have embossments 4 on the aesthetic surface, for instance in the form of small dimples. However other repeating or random patterns are possible as well. Surprisingly already small protrusions -grain effect- may function as an anti-slip surface in case the versatile layer is used as a flooring layer, for instance underneath the passenger chairs or in the trunk or front packaging space. Due to the size and the distribution throughout the versatile layer the filler particles will be included in the surface protrusions and as such enhance the abrasion performance of the layer as well as prevent an early abrasive erasure of even small protrusions.

For the versatile layer with filler, it was found that the layer did not loose any significant amount of material when subjected to Taber testing. While small surface bumps of 1-2mm in cross section were not affected at all by the Taber testing. The weight reduction at 1000 cycles was with less than 0.5%, much less than one would normally expect for similar type of products like TPO Thermoplastic polyolefin, which are less resilient to scratching. This although the material can still be moulded and is pliable also after moulding, maintaining its thermoplastic elastomeric structure.

An Automotive flooring part with a versatile layer according to the invention, whereby the filler consists of thermoplastic terephthalate-based powder filler, and whereby the flooring part further comprises a terephthalate-based carpet surface layer and a terephthalate based fibrous padding layer and whereby the versatile layer is between the carpet surface layer and the padding layer and whereby all layers are laminated to adjacent layers.

Alternatively, a strip of the abrasion pad is placed at a border area of the mat or flooring part where the legs or the foot scuff or rest as well as the area where the heels of the driver and/or passenger(s) contact the mat.

The heel pad may be extruded, or injection moulded. The surface may be embossed or grained to increase the surface roughness and improve the anti-slip properties, as well as to prevent water or dirt from reducing the same. Furthermore, the pad may be formed to fit in a recess in the underlying flooring or mat part, or to follow a curvature or 3 D shape.

The pad according to the invention may be used as a loose single layer mat to replace classic PVC mats for floor protection or may be used as a local pad or strip on a floor mat or integrated flooring system in a car. In both cases it may be attached by mechanical or chemical means to the surface of the part, this may be a polyester nonwoven or tufted carpet layer comprising polyester-based fibers or yarn. Preferably the pad is thermally welded to the surface of the flooring system or pad.

## Claims

1. Versatile layer for an automotive part comprising a matrix and a filler **characterized in that** the filler is a thermoplastic filler consisting of a thermoplastic polymer-based powder with a melting temperature at least 20°C above the melting temperature of the matrix.

2. Versatile layer according to one of the previous claims, whereby the filler content is at least 20% by weight of the layer, preferably at least 40% by weight of the layer, preferably at least 50% by weight of the layer.

3. Versatile layer for an automotive part according to one of the preceding claims, whereby the thermoplastic filler is comprising at least terephthalate-based material, preferably consisting of terephthalate-based material.

4. Versatile layer for an automotive part according to one of the preceding claims whereby the thermoplastic powder filler comprises at least one of a polymer or copolymer of polyethylene terephthalate (PET) and or a polymer or copolymer of polybutylene terephthalate (PBT) and or a polymer or copolymer of polybutylene terephthalate (PBT) and or Polytrimethylene terephthalate (PTT) and or Polycyclohexylenedimethylene terephthalate (PCT) and or a combination of one or more as listed.

5. Versatile layer for an automotive part according to one of the preceding claims, whereby the thermoplastic filler is a powder with a particle size not larger than 300 microns, preferably the main particle size is between 150 and 200 microns.

6. Versatile layer according to one of the preceding claims whereby the E-modulus of the versatile layer is between 60 and 120MPa, preferably between 70 and 110 MPa.

7. Versatile layer according to one of the preceding claims whereby the Tensile stress at break is in the range of 4-8 MPa.

8. Versatile layer according to one of the preceding claims, whereby the matrix comprises at least a first copolymer of terephthalate-based material, and whereby the first copolymer is at least 40% by weight of the versatile layer, preferably at least 50% by weight of the versatile layer.

9. Versatile layer for an automotive part according to one of the preceding claims, whereby the first copolymer has a melting temperature in the range of 140 to 160°C as measured with DSC.

10. Versatile layer for an automotive part according one of the preceding claims, whereby the first copolymer is a copolyester thermoplastic elastomers (TPEE).

11. Versatile layer for an automotive part according to one of the preceding claims, further comprising a second copolymer of terephthalate-based material.

12. Versatile layer for an automotive part according to claim 5, whereby the second copolymer has a melting temperature in the range of 130 to 155°C as measured with DSC.

13. Versatile layer for an automotive part according to claim 5 or 6 whereby the second copolymer is up to 20% by weight based on the full layer,

14. Versatile layer for an automotive part according to one of the preceding claims, whereby the first and optionally second copolymer are not more than 80% by weight of the full layer.

15. Versatile layer according to one of the previous claims, further comprising process aiding additives, preferably stearic acid, preferably up to 1% by weight of the full layer pigments and or dyes and or UV filters and or odoror volatile-organic-compound (VOC) scavengers.

16. Automotive part comprising a versatile layer according to one of the previous claims.

17. Automotive part with a versatile layer according to one of the preceding claims, further comprising ad least one additional layer, preferably at least one of a fibrous layer, a foam layer, a film layer, an adhesive layer, composite layer, a carpet layer, surface layer, stiffening layer, like a honeycomb layer, carton layer, paper layer or wood layer, whereby the at least one additional layer is at least partially laminated to adjacent layer either surface to surface or at spots or along a line.

18. Automotive part with a versatile layer according to one of the preceding claims, whereby the versatile layer is at least part of a surface layer, the only layer of the part, or an intermediate layer.

19. Automotive part with a versatile layer according to one of the preceding claims, wherein the area weight of said versatile layer is greater than 0.1kg/m², preferably between 0.1 and 8 kg/m².
